# EUROPÄISCHE PATENTSCHRIFT

(11) **EP 3 892 967 B1**
(45) Veröffentlichungstag und Bekanntmachung des Hinweises auf die Patenterteilung: **03.08.2022**
(21) Anmeldenummer: 20168263.0
(22) Anmeldetag: 06.04.2020
(51) Int. Cl.: G01G 19/04, B21B 37/32, B21B 37/36

(54) **KRAFTMESSEINRICHTUNG ZUR ERFASSUNG VON BAHNZÜGEN EINER LAUFENDEN MATERIALBAHN**
FORCE MEASURING DEVICE FOR DETECTING WEB TENSIONS OF A MOVING WEB
DISPOSITIF DE MESURE DE FORCE PERMETTANT DE DÉTECTER DES TRACTIONS DE BANDE D'UNE BANDE DE MATIÈRE CONTINUE

(43) Veröffentlichungstag der Anmeldung: 13.10.2021
(73) Patentinhaber: FMS Force Measuring Systems AG, 8154 Oberglatt (CH)
(72) Erfinder: Inhelder, Jörg, 8309 Nürensdorf (CH)
(74) Vertreter: Zeuner Summerer Stütz

(56) Entgegenhaltungen:
- WO-A1-2005/036117
- DE-A1- 3 735 022

## Beschreibung

Die Erfindung betrifft eine Kraftmesseinrichtung zur Erfassung von Bahnzügen einer laufenden Materialbahn, die eine durch die Laufrichtung definierte Längsrichtung und eine dazu senkrechte Querrichtung aufweist. Die Kraftmesseinrichtung weist dabei eine Achse und eine auf der Achse abgestützte, von der Materialbahn umschlungene Messwalze auf.

In Anlagen zur Herstellung oder Weiterverarbeitung bahnförmiger Materialien, beispielsweise Papier, Kunststofffolien oder Alufolien, werden die Materialbahnen zu Beginn des Verarbeitungsprozesses mit Bahnbreiten von einigen Metern verarbeitet. Oft werden für die Weiterverarbeitung, beispielsweise beim Etikettendruck oder der Verpackungsherstellung, deutlich schmalere Bahnen benötigt, und die Materialbahnen werden dazu auf Rollenschneidern in schmalere Längsstreifen der gewünschten Breite geschnitten. Herkömmliche Kraftmesseinrichtungen, wie aus der DE 37 35 022 A1 bekannt, messen den Bahnzug der gesamten Materialbahn über die ganze Walzenbreite, für die Weiterverarbeitung geschnittener Bahnen wäre es allerdings von Vorteil, genauere Angaben über die Verteilung des Bahnzugs entlang der Querrichtung der laufenden Bahn zu erhalten.

Hier setzt die Erfindung an. Der Erfindung, wie sie in den Ansprüchen gekennzeichnet ist, liegt die Aufgabe zugrunde, eine Kraftmesseinrichtung der eingangs genannten Art anzugeben, mit der die Verteilung des Bahnzugs entlang der Querrichtung einer laufenden Materialbahn erfasst werden kann.

Diese Aufgabe wird durch die Merkmale der unabhängigen Ansprüche gelöst. Weiterbildungen der Erfindung sind Gegenstand der abhängigen Ansprüche. Gemäß der Erfindung ist bei einer gattungsgemäßen Kraftmesseinrichtung vorgesehen, dass
- die Messwalze als segmentierte Messwalze mit zwei oder mehr Messsegmenten ausgebildet ist, welche separat auf der Achse verschiebbar und in einer Messposition auf der Achse arretierbar sind, um die Messsegmente entsprechend gewünschter Messpositionen in Querrichtung der Materialbahn zu positionieren, so dass Längsabschnitte der Materialbahn jeweils ein Messsegment umschlingen,
- die Messsegmente jeweils einen Kraftaufnehmer umfassen, der der Bestimmung des Bahnzugs des das jeweilige Messsegment umschlingenden Längsabschnitts der Materialbahn dient und der eine Halterung bereitstellt, mit der das Messsegment auf der Achse aufsitzt, und
- die Achse mit sich im Wesentlichen in axialer Richtung über die gesamte Breite erstreckenden elektrischen Leitern versehen ist, die axial an jeder Stelle kontaktierbar sind und mit denen die von den Kraftaufnehmern der Messsegmente gelieferte Messsignale zu einer an einem Achsenende angeordneten Auswerteeinheit leitbar sind.

Die elektrischen Leiter der Achse können in einer inneren axialen Kammer, beispielsweise der weiter unten genauer beschriebenen Führungskammer angeordnet sein, sie können aber auch an der Außenseite der Achse, beispielsweise in einer axialen Außennut der Achse angeordnet sein. Wesentlich ist dabei lediglich, dass die elektrischen Leiter axial an jeder Stelle, an der Messsegmente arretierbar sind, also im Wesentlichen an jeder Stelle entlang der Breite der Achse, kontaktierbar sind, so dass sie unabhängig von den jeweiligen Messpositionen der Messsegmente die von den Kraftaufnehmern gelieferten Messsignale zur Auswerteeinheit leiten können.

Die Messsegmente umfassen dabei zweckmäßig neben dem Kraftaufnehmer einen Walzenmantel und eine von dem Kraftaufnehmer getragene Lagerung für den Walzenmantel.

In einer bevorzugten Ausgestaltung enthält der Kraftaufnehmer jeweils einen auf der Achse aufliegenden Innenring, die die genannte Halterung bereitstellt. Der Kraftaufnehmer weist weiter einen gegenüber dem Innenring unter Krafteinwirkung verschiebbaren, konzentrischen Außenring und einen den Innenring und Außenring in einem Verbindungsbereich verbindenden Messabschnitt auf. Bei der Messung des Bahnzugs wird durch die Krafteinleitung der Außenring radial relativ zu dem Innenring verschoben und dadurch Spannungen in dem Messabschnitt erzeugt, die mittels Dehnmessstreifen erfasst werden können.

Mit besonderem Vorteil weist der Innenring eine Einbuchtung auf, in der der Verbindungsbereich mit dem Außenring aufgenommen ist. Die Einbuchtung kann sich radial bis zum halben Radius des Innenrings, vorzugsweise sogar bis zum Mittelpunkt des Innenrings erstrecken. Der Kraftaufnehmer ist vorteilhaft mit der Einbuchtung des Innenrings in einer axialen Führungskammer der Achse geführt. Auf diese Weise wird eine besonders kompakte Bauweise des Kraftaufnehmers und der Kraftmesseinrichtung erreicht und der Kraftaufnehmer zudem mit der Achse der Kraftmesseinrichtung integriert.

Gemäß einer vorteilhaften Erfindungsvariante sind der Innenring und der Außenring radial ineinander angeordnet und in einem radialen Verbindungsbereich durch den Messabschnitt verbunden. Als Überlastschutz sind der Innenring und der Außenring vorzugsweise außerhalb des Verbindungsbereichs durch einen schmalen radialen Spalt getrennt, dessen Breite so bemessen ist, dass der bewegliche Außenring bei Überlast am auf der Achse fixierten Innenring ansteht. Die Spaltbreite entspricht beispielsweise 110% des Messwegs bei Nennbelastung und liegt typischerweise im Bereich einiger zehntel Millimeter.

Bei einer anderen, ebenfalls vorteilhaften Ausgestaltung sind der Innenring und der Außenring axial beabstandet angeordnet und in einem axialen Verbindungsbereich durch den Messabschnitt verbunden.

Der Kraftaufnehmer ist vorteilhaft mit Dehnmessstreifen zur Erfassung des Bahnzugs versehen. Vorzugsweise ist der einen Innenring und Außenring verbindende Messabschnitt mit den genannten Dehnmessstreifen zur Erfassung der in dem Messabschnitt erzeugten mechanischen Spannung versehen.

In einer vorteilhaften Ausgestaltung ist der Messabschnitt in Form eines Doppelbiegebalkens ausgebildet.

Der Innenring, der Außenring und der Messabschnitt des Kraftaufnehmers sind mit besonderem Vorteil einstückig ausgebildet.

Gemäß einer bevorzugten Ausgestaltung ist die Achse als Strangprofil ausgebildet. Vorzugsweise weist das Strangprofil einen vertikalen Steg und zwei von dem vertikalen Steg ausgehende horizontale Führungsschienen auf, so dass der vertikale Steg und die beiden Führungsschienen eine U-förmige axiale Führungskammer in dem Strangprofil der Achse bilden.

Alternativ kann die Achse auch als gefräste Achse ausgebildet sein, bei der die axiale Führungskammer und gegebenenfalls weitere Ausnehmungen, wie etwa eine axiale Nut für einen Luftschlauch und eine Druckleiste, in einen Rundstab eingefräst sind. Die Herstellung der Achse als Fräselement ist einfach und kostgünstig, erlaubt aber keine radial abgeschlossenen Hohlräume und bedingt daher in Regel ein höheres Gewicht als es Strangprofile gleicher Biegesteifigkeit aufweisen.

Die Achse ist vorteilhaft in einer Führungskammer mit axial verlaufenden Stromschienen versehen, die an einer beliebigen axialen Position von Stromabnehmern der Kraftaufnehmer der Messsegmente kontaktierbar sind und die genannten elektrischen Leiter bilden. Mit besonderem Vorteil sind in der axialen Führungskammer sowohl der Kraftaufnehmer mit der Einbuchtung des Innenrings geführt, als auch die axial verlaufenden Stromschienen angeordnet.

Die Messsegmente enthalten bevorzugt jeweils eine Elektronikeinheit zur Speisung der Dehnmessstreifen und zur Aufnahme, zur Vorverstärkung, vorzugsweise zusätzlich zur Digitalisierung, und zur Einleitung der vorverstärkten und gegebenenfalls digitalisierten Messsignale in die elektrischen Leitungen, insbesondere die Stromschienen der Achse. Eine Digitalisierung der Messsignale ist insbesondere dann von Vorteil, wenn die segmentierte Messwalze eine größere Anzahl von Messsegmenten, beispielsweise vier oder mehr oder sechs oder mehr Messsegmente umfasst, da die digitalisierten Messsignale dann über ein Busprotokoll über wenige, typischerweise zwei Stromleitungen zur Auswerteeinheit geführt werden können. Vor allem wenn die segmentierte Messwalze nur eine geringe Anzahl von Messsegmenten enthält, können die Messsignale natürlich auch analog jeweils über eine eigene Stromleitung zur Auswerteeinheit geführt werden.

In einer vorteilhaften Ausgestaltung sind die Messsegmente jeweils mit seitlichen Abstandhaltern versehen, deren Abmessung so auf die Abmessung des jeweiligen Walzenmantels abgestimmt ist, dass die Messsegmente auf der Achse so zusammenschiebbar sind, dass die Walzenmäntel praktisch spaltfrei, aber ohne gegenseitige Berührung nebeneinander liegen. In der Praxis bedeutet dies Abstände der Walzenmäntel im zusammengeschobenen Zustand von einigen zehntel bis hin zu etwa einem Millimeter.

Auf der Achse sind vorteilhaft zwei oder mehr, insbesondere drei oder mehr, vier oder mehr oder sogar sechs oder mehr Messsegmente positioniert und arretiert, so dass die Messwalze als segmentierte Messwalze mit zwei oder mehr, drei oder mehr, vier oder mehr oder sogar sechs oder mehr Messsegmenten ausgebildet ist.

Die Messsegmente sind in einer vorteilhaften Ausgestaltung jeweils mit beabstandeten Walzenmänteln auf der Achse positioniert und arretiert, so dass die segmentierte Messwalze insbesondere zur Erfassung der Bahnzüge der Längsstreifen einer geschnittenen laufenden Materialbahn ausgelegt und eingerichtet ist. Die Anzahl und die Positionen der Messsegmente und die Breite ihrer Walzenmäntel sind zweckmäßig an die Anzahl, die Positionen und die Breiten der geschnitten Längsstreifen der Materialbahn angepasst.

In einer anderen, ebenfalls vorteilhaften Ausgestaltung sind die Messsegmente so auf der Achse positioniert und arretiert, dass ihre Walzenmäntel ohne sich zu berühren praktisch spaltfrei benachbart sind. Die segmentierte Messwalze ist dann insbesondere zur Erfassung der Bahnzüge der Längsabschnitte einer ungeschnittenen laufenden Materialbahn und damit auf die Erfassung eines Zugprofils in Querrichtung der Materialbahn ausgelegt und eingerichtet. Die Anzahl und die Positionen der Messsegmente und die Breite ihrer Walzenmäntel sind zweckmäßig an die Auflösungsanforderungen für die Messung des Zugprofils angepasst.

Die erfindungsgemäße Kraftmesseinrichtung ermöglicht die Messung der Bahnzüge in der Querrichtung einer laufenden Materialbahn, sowohl in den einzelnen Längsstreifen einer geschnittenen Bahn, als auch lokal in den Längsabschnitten einer ungeschnittenen Bahn. Es versteht sich, dass die verschiebbaren und arretierbaren Messsegmente im Betrieb der Kraftmesseinrichtung jeweils in einer bestimmten Position arretiert sind, die dem Ort der gewünschten Bahnzugmessung entspricht. Soll mit der Kraftmesseinrichtung nachfolgend ein anderes Zugprofil oder der Bahnzug einer anderen Längsstreifenkonfiguration gemessen werden, werden die Arretierungen gelöst und die Messsegmente entsprechend auf die Achse verschoben und neu arretiert. Wird eine andere Anzahl von Messsegmenten benötigt oder werden Messsegmente andere Breite benötigt, können auch Messsegmente von der Achse entnommen und/oder weitere oder andere Messsegmente gewünschter Breite auf die Achse aufgeschoben werden. Die beschriebene Kraftmesseinrichtung kann daher sehr flexibel an den jeweiligen Messauftrag und die Messanforderungen angepasst werden.

Durch eine Messung der Bahnzüge der Längsstreifen einer geschnittenen Bahn wird eine individuelle Regelung des Aufwickelvorgangs möglich und damit viel Ausschuss durch ungeeignete Zugverhältnisse in einzelnen Längsstreifen vermieden. Auch bei ungeschnittenen Materialbahnen ist die Kenntnis des Zugprofils oft von großem Nutzen. Beispielsweise kann bei der Herstellung von Blasfolien durch eine Messung des Zugprofils des erzeugten Folienschlauchs das Kühlprofil des Schmelzschlauchs nachgeregelt werden, um ein gleichmäßiges Zugprofil des Folienschlauchs zu erhalten.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: schematisch eine in Längsstreifen geschnittene Materialbahn, bei der die Bahnspannungen der Längsstreifen einzeln erfasst werden sollen,
- Fig. 2: schematisch eine erfindungsgemäße Kraftmesseinrichtung,
- Fig. 3: einen Querschnitt durch eine erfindungsgemäße Kraftmesseinrichtung in einer der Linie III-III der Fig. 2 entsprechenden Richtung,
- Fig. 4: den Kraftaufnehmer eines Messsegmentes der Kraftmesseinrichtung der Fig. 3 separat im Querschnitt,
- Fig. 5: eine perspektivische Ansicht des Kraftaufnehmers der Fig. 4,
- Fig. 6: die Achse der Kraftmesseinrichtung der Fig. 3 separat in perspektivischer Ansicht,
- Fig. 7: in (a) die Achse der Fig. 6 im Querschnitt, in (b) eine gefräste Achse nach einem weiteren Ausführungsbeispiel der Erfindung,
- Fig. 8: den Kraftaufnehmer der Fig. 4 mit eingezeichneter Elektronikplatine und den Kontaktbereichen zu den Dehnmessstreifen und den Stromschienen der Achse,
- Fig. 9: einen erfindungsgemäßen Kraftaufnehmer mit einem in axialer Richtung verlaufenden Messabschnitt im Querschnitt,
- Fig. 10: schematisch eine auf die Aufnahme des Zugprofils einer ungeschnittenen Materialbahn eingerichtete erfindungsgemäße Kraftmesseinrichtung, und
- Fig. 11: schematisch ein mit der Kraftmesseinrichtung der Fig. 10 gemessenes Zugprofil einer ungeschnittenen Materialbahn, bei dem die Kraft F über der Ausdehnung x in Querrichtung aufgetragen ist.

Die Erfindung wird nun am Beispiel einer Kraftmesseinrichtung zur Erfassung von Bahnzügen einer geschnittenen laufenden Materialbahn erläutert.

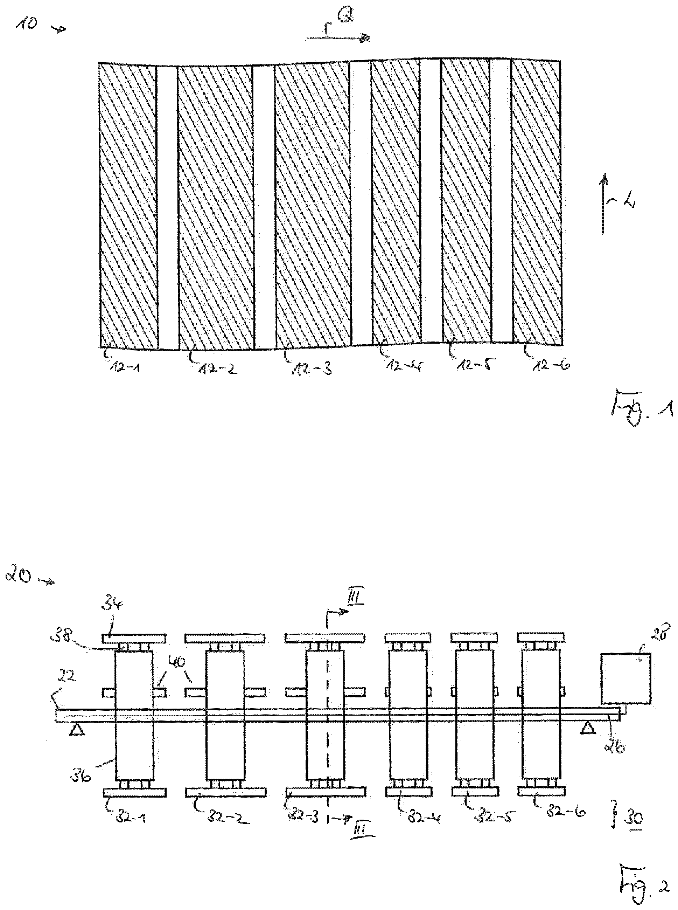

Figur 1 zeigt beispielhaft eine Materialbahn 10, deren Laufrichtung eine Längsrichtung L und eine dazu senkrechte Querrichtung Q definiert. Die Materialbahn 10 ist im Ausführungsbeispiel in n=6 Längsstreifen geschnitten und zwar mit einem Längsstreifen 12-1 mittlerer Breite, zwei breiteren Längsstreifen 12-2, 12-3 und drei schmäleren Längsstreifen 12-4, 12-5, 12-6.

Für den nachfolgenden Aufwickelvorgang der Längsstreifen ist es vorteilhaft, den Bahnzug in jedem der Streifen einzeln zu kennen. Während herkömmliche Messeinrichtungen nur eine Messung des Bahnzugs der gesamten Bahn 10 über die ganze Walzenbreite erlauben, ermöglicht die nachfolgend beschriebene erfindungsgemäße Kraftmesseinrichtung 20 die separate Messung des Bahnzugs in jedem einzelnen der Mehrzahl von Längsstreifen 12-i (i=1..6) der Materialbahn 10.

Figur 2 zeigt in schematischer Darstellung eine erfindungsgemäße Kraftmesseinrichtung 20. Die Kraftmesseinrichtung 20 enthält eine biegesteife Achse 22, die an ihren beiden Enden auf einem nicht dargestellten bauseitigen Untergerüst aufliegt. Auf der Achse 22 ist eine Messwalze 30 abgestützt, die im Betrieb von der zu vermessenden Materialbahn 10 umschlungen ist.

Die Messwalze ist erfindungsgemäß als segmentierte Messwalze 30 ausgebildet, die im Ausführungsbeispiel der Messung des Bahnzugs der 6 Längsstreifen 12-i der Materialbahn 10 der Fig. 1 dient und daher aus n=6 an die Längsstreifen 12-i angepassten Messsegmenten 32-i, mit i= 1...6, besteht.

Die Messsegmente 32-i können sich wie in Fig. 2 in ihrer Breite, insbesondere der Breite ihres Walzenmantels unterscheiden, sie sind mit ihren strukturellen Merkmalen ansonsten aber vorzugsweise identisch ausgebildet. Die nachfolgende Beschreibung eines Messsegments betrifft daher alle Messsegmente 32-i der Messwalze 30, so dass der Index i der Einfachheit halber meist weggelassen wird.

Die Messsegmente 32 sind separat auf der Achse 22 verschiebbar und in einer Messposition auf der Achse arretierbar, um sie entsprechend der gewünschten Messpositionen in Querrichtung Q der Materialbahn 10 so positionieren zu können, dass die Längsstreifen 12-i der Materialbahn 10 jeweils auf einem Walzenmantel 34 eines zugehörigen Messsegments 32-i aufliegen und dieses umschlingen. Der Walzenmantel 34 der Messsegmente ist jeweils über ein Wälzlager 38 mit einem Kraftaufnehmer 36 verbunden, der der Bestimmung des Bahnzugs des das jeweilige Messsegment umschlingenden Längsabschnitts 12 der Materialbahn 10 dient. Der Kraftaufnehmer 36 stellt zudem eine Halterung bereit, mit der das jeweilige Messsegment 32 auf der Achse 22 aufsitzt.

Die Breite der Walzenmäntel 34 der Messsegmente 32 ist an die Breite der zugehörigen Längsstreifen 12 der Materialbahn angepasst, wie in Fig. 1 und 2 dargestellt. Im Ausführungsbeispiel besteht die Messwalze 30 daher aus einem Messsegment 32-1 mit einem Walzenmantel mittlere Breite, zwei Messsegmenten 32-2, 32-3 mit breiteren Walzenmänteln und drei Messsegmenten 32-4, 32-5, 32-6 mit schmäleren Walzenmänteln.

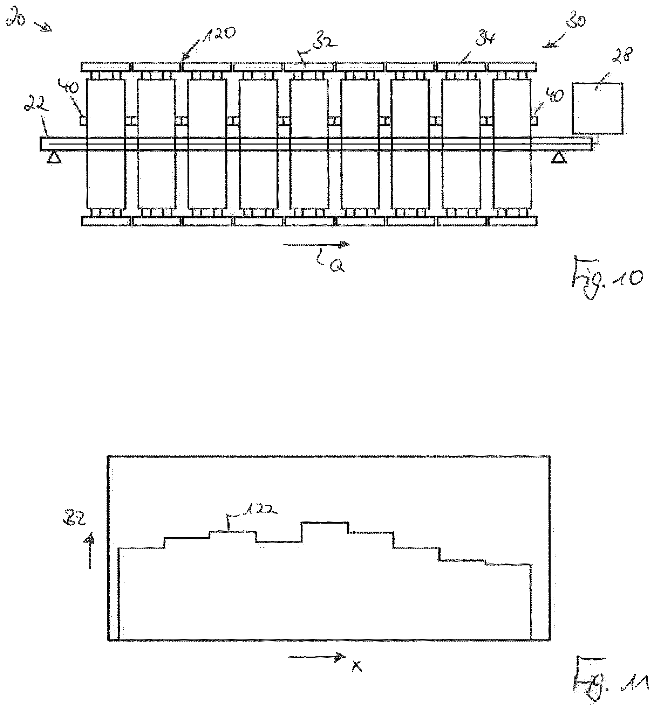

Die Achse 22 ist mit sich im Wesentlichen in axialer Richtung über die gesamte Breite erstreckenden elektrischen Leitern 26 versehen, die axial an jeder Stelle kontaktierbar sind und mit denen die von den Kraftaufnehmern 36 der Messsegmente 32 gelieferten Messsignale zu einer an einem Achsenende angeordneten Auswerteeinheit 28 geführt werden. Die elektrischen Leiter 26 können dabei auf der Außenseite der Achse 22, beispielsweise in einer axialen Nut angeordnet sein, sie können vorteilhaft aber auch in einer weiter unten genauer beschriebenen Führungskammer der Achse vorliegen. Die Messsegmente 32 sind weiter mit Abstandhaltern 40 versehen, deren Funktion bei Fig. 10 genauer erläutert wird.

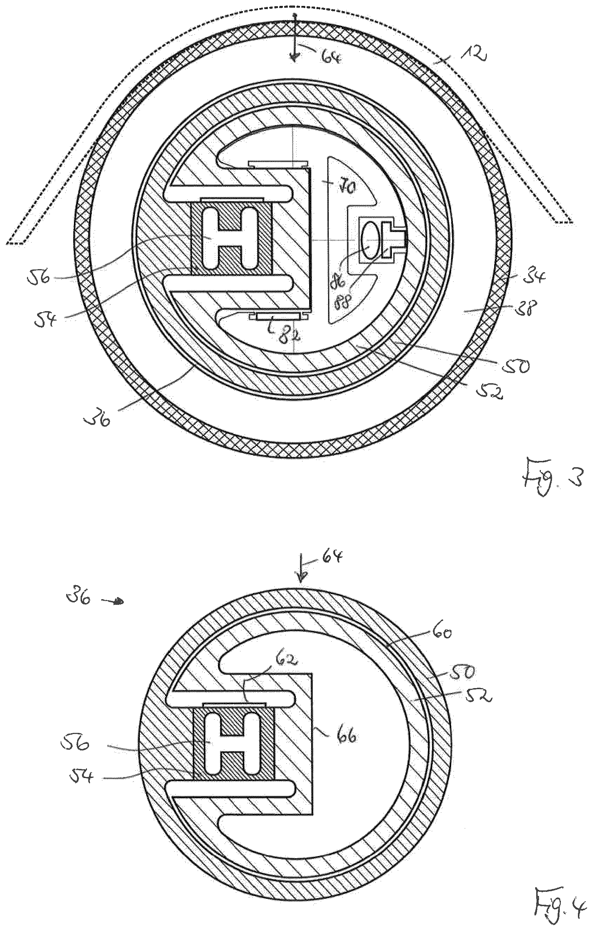

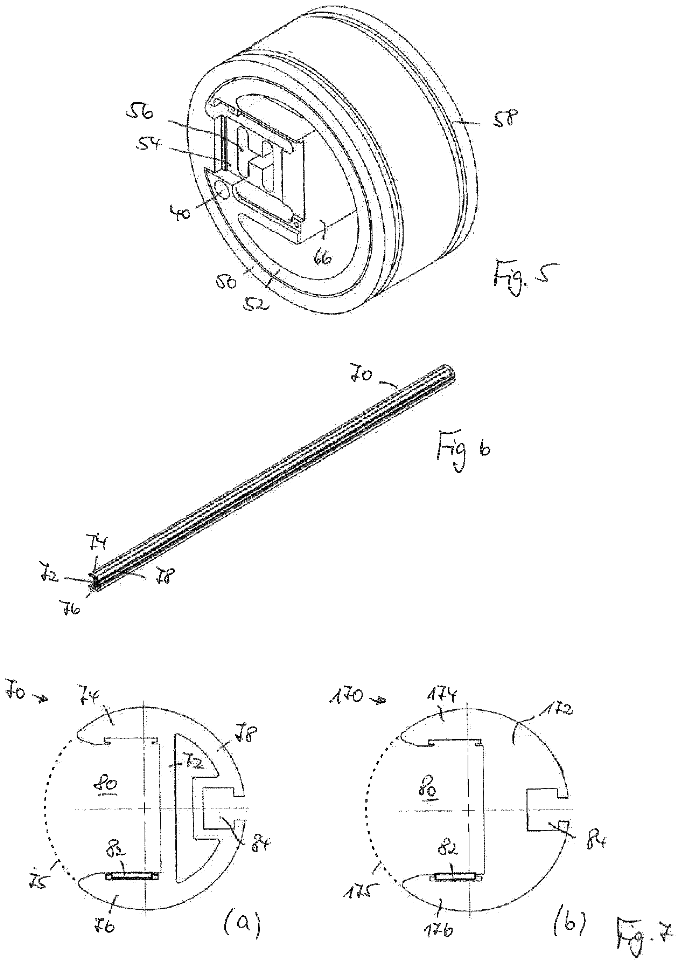

Eine vorteilhafte Ausbildung der Messsegmente 32 und der Achse 70 einer erfindungsgemäßen Kraftmesseinrichtung wird nun mit Bezug auf die Figuren 3 bis 7 näher beschrieben. Figur 3 zeigt dabei einen Querschnitt durch die Kraftmesseinrichtung 20 in einer der Linie III-III der Fig. 2 entsprechenden Richtung. Der Kraftaufnehmer 36 eines Messsegmentes 32 alleine ist in Fig. 4 im Querschnitt und in Fig. 5 in perspektivischer Ansicht dargestellt, die Achse 70 alleine ist in perspektivischer Ansicht in Fig. 6 und in Fig. 7 im Querschnitt gezeigt.

Mit Bezug zunächst auf Fig. 3 enthält das Messsegment 32 radial von außen nach innen einen Walzenmantel 34, ein Wälzlager 38 und einen Kraftaufnehmer 36. Der das Messsegment 32 umschlingende Längsstreifen 12 der Materialbahn 10 ist mit gestrichelten Linien angedeutet.

Der in den Figuren 4 und 5 nochmals separat dargestellte Kraftaufnehmer 36 umfasst dabei einen äußeren Ring 50, einen konzentrischen inneren Ring 52 und einen Messabschnitt 54 mit einer H-förmigen Ausnehmung 56. Der äußere Ring 50 weist Einschnitte 58 (Fig. 5) zur Aufnahme des Wälzlagers 38 über nicht dargestellte Sicherungsringe auf, der innere Ring 52 liegt auf der Achse 70 auf und stellt die oben genannte Halterung bereit. Der innere Ring 52 und der äußere Ring 50 sind im Ausführungsbeispiel radial ineinander angeordnet und in einem radialen Verbindungsbereich durch den Messabschnitt 54 verbunden. Der innere Ring 52 weist hierzu eine Einbuchtung 66 auf, die sich radial bis zum Mittelpunkt des inneren Rings 52 erstreckt. In der Einbuchtung 66 ist einerseits der Verbindungsbereich mit dem äußeren Ring aufgenommen, andererseits dient sie der sicheren Führung des Kraftaufnehmers in der axialen Führungskammer 80 (Fig. 7) der Achse 70.

Der äußere Ring 50, der innere Ring 52 und der Messabschnitt 54 sind einstückig ausgebildet, die unterschiedlichen Schraffuren der Figuren 3 und 4 dienen lediglich der Veranschaulichung der verschiedenen Funktionsbereiche 50, 52, 54 des Kraftaufnehmers 36.

Außerhalb des Verbindungsbereichs sind der innere und der äußere Ring durch einen radialen Spalt 60 getrennt, dessen Breite so bemessen ist, dass der bewegliche äußere Ring 50 bei Überlast an dem auf der Achse 70 fixierten inneren Ring 52 ansteht und so eine plastische Deformation und damit eine Zerstörung des Kraftaufnehmers 36 vermeidet. Im Ausführungsbeispiel ist die Breite des Spalts 60 auf 110% des Messwegs bei Nennbelastung ausgelegt.

Durch die H-förmige Ausnehmung 56 bildet der Messabschnitt 54 einen Doppelbiegebalken, bei dem im gezeigten Ausführungsbeispiel an dessen Oberseite Dehnmessstreifen 62 zur Messung der durch die Krafteinleitung erzeugten mechanischen Spannung an der Materialoberfläche angeordnet sind. Es versteht sich, dass Dehnmessstreifen 62 auch an der Unterseite oder sowohl an Ober- und Unterseite des Doppelbiegebalkens vorgesehen sein können.

Die Umschlingung des Messsegments 32 mit einem Längsstreifen 12 der Materialbahn erzeugt eine vom Umschlingungswinkel und dem Bahnzug abhängige Kraft 64, die den beweglichen äußeren Ring 50 des Kraftaufnehmers 36 gegenüber dem fixierten inneren Ring 52 nach unten verschiebt und dadurch zu einer Verbiegung des Doppelbiegebalkens des Messabschnitts 54 führt. Diese Verbiegung wird von den Dehnmessstreifen 62 erfasst und ein entsprechendes elektrisches Signal erzeugt, das von einer Elektronikeinheit des Messsegments 32 vorverstärkt und in geeigneter Form über die Stromschienen der Achse 70 an die Auswerteeinheit 28 übermittelt wird.

Die Achse 70 ist mit Bezug auf die Figuren 3, 6 und 7(a) im gezeigten Ausführungsbeispiel als Strangprofil ausgebildet, das über seiner Breite mehrere einzeln messende Messsegmente 32 aufnehmen kann, wie in Figuren 2 und 10 schematisch gezeigt. Die Ausbildung der Achse 70 als Strangprofil ermöglicht eine biegesteife Ausbildung der Achse, die sich auch bei maximaler Belastung durch hohe Bahnzüge nicht oder nur minimal verformt und damit die geometrische Anordnung der Messsegmente über die Breite und somit auch die Bahnzugmessung nicht beeinflusst.

Die Strangprofilachse 70 ist im Ausführungsbeispiel mit einem kreisförmigen Querschnittsumfang 75 ausgebildet. Sie enthält einen zentralen vertikalen Steg 72, der die Stabilität der Achse sicherstellt, und von dem zwei horizontale Führungsschienen 74,76 und ein Führungsbogen 78 ausgehen. Die horizontalen Führungsschienen 74,76 bilden zusammen mit dem Steg 72 eine auf einer Seite offene, U-förmige, axiale Führungskammer 80 in der Achse 70, in die die Einbuchtung 66 des inneren Rings zur Führung und zum elektrischen Anschluss des Kraftaufnehmers hineinragt (Fig. 3). Der Führungsbogen 78 und die radialen Außenflächen der Führungsschienen 74, 76 sind mit ihrer Krümmung mit enger Toleranz an die Krümmung des inneren Rings 52 angepasst, so dass die Messsegmente 32 auf der Achse einerseits leicht verschiebbar sind, andererseits aber auch durch eine beispielsweise mechanische oder pneumatische Arretierung leicht und sicher arretierbar sind.

Um die von den Dehnmessstreifen 62 des Kraftaufnehmers eines Messsegments 32 erzeugten elektrischen Signale zur Auswerteeinheit 28 zu führen, ist die untere horizontale Führungsschiene 76 der Achse 70 in einem zurückgesetzten Bereich mit axial verlaufenden Stromschienen 82 versehen, die die Stromversorgung und den elektrischen Kontakt mit den Messsegmenten 32 unabhängig von ihrer Position auf der Achse 70 ermöglichen. Es versteht sich, dass die Stromschienen auch an anderer Stelle in der Führungskammer, beispielsweise an der oberen Führungsschiene 74 oder auch an beiden Führungsschienen 74, 76 vorgesehen sein können.

Anstelle eines Strangprofils kann die Achse auch als gefräste Achse 170 ausgebildet sein, wie in Fig. 7(b) dargestellt, in die eine U-förmige, axiale Führungskammer 80 und eine axiale Nut 84 eingefräst sind. Der Achsenkörper 172 enthält dabei eine zentrale vertikale Tragstruktur, die die Stabilität der Achse sicherstellt, und von der zwei horizontale Führungsschienen 174, 176 ausgehen, um zusammen mit dem Achsenkörper 172 innerhalb des Querschnittsumfangs 175 eine U-förmige, axiale Führungskammer 80 in der Achse 70 ausbilden, in die die Einbuchtung 66 des inneren Rings zur Führung und zum elektrischen Anschluss des Kraftaufnehmers hineinragt.

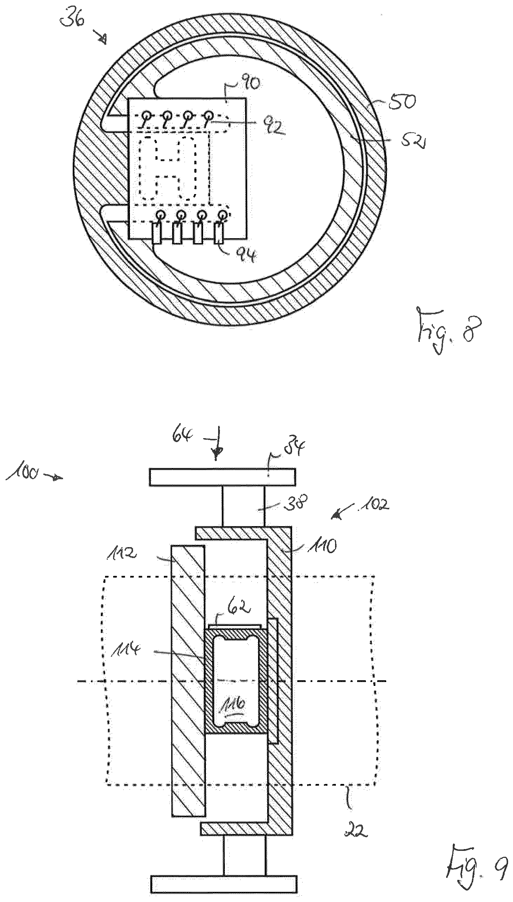

Wie in Fig. 8 illustriert, enthalten die Kraftaufnehmer 36 neben den bereits beschriebenen mechanischen Elementen eine Platine 90 mit einer Elektronikschaltung, die in einem Kontaktbereich 92 zur Speisung und Abnahme des Messsignals mit den Dehnmessstreifen 62 verbunden ist und die über Stromabnehmer 94 an jeder beliebigen axialen Position der Achse 70 Kontakt zu den Stromschienen 82 herstellen kann. Die Elektronikschaltung der Platine 90 enthält im gezeigten Ausführungsbeispiel zur Aufbereitung der Signale einen Vorverstärker, der die Messsignale der Dehnmessstreifen 62 verstärkt, digitalisiert und das digitalisierter Messsignal an einen internen Bus weitergibt.

An einem Ende der Achse ist die Auswerteeinheit 28 angeordnet, die mit den Messsegmenten 32-i auf der Achse 70 kommuniziert und deren Messwerte aufnimmt und weiterverarbeitet. Im Ausführungsbeispiel enthalten die Stromschienen 82 zu diesem Zweck neben zwei Stromschienen für die Stromversorgung zwei weitere Stromschienen für eine Datenübertragung zur Auswerteeinheit 28, beispielsweise nach dem RS-485 Standard. Enthält eine Messwalze nur wenige Messsegmente, oder soll aus anderen Gründen keine Digitalisierung erfolgen, können die vorverstärkten Messsignale natürlich auch analog über jeweils eine eigene Stromschiene zur Auswerteeinheit geführt werden.

Die Auswerteeinheit 28 kommuniziert ihrerseits über ein standardisiertes BusProtokoll mit einer übergeordneten Steuerung, die auf Grundlage der von den verschiedenen Messsegmenten 32 gelieferten Messwerte geeignete Aktionen auslöst, beispielsweise einen der Antriebe langsamer oder schneller laufen lässt, eine Alarmmeldung ausgibt oder dergleichen.

Die sichere Arretierung der Messsegmente 32 auf der Achse 70 erfolgt im Ausführungsbeispiel mit Hilfe eines axialen Luftschlauchs 86 und einer axialen Druckleiste 88 (Fig. 3), die beide in eine im Führungsbogen 78 der Achse 70 ausgebildeten Nut 84 eingelassen sind.

Im entspannten Zustand des Luftschlauchs 86 sind die Messsegmente 32 auf der Achse frei verschiebbar und können in der gewünschten Anzahl an den gewünschten Positionen auf der Achse angeordnet werden. Wird der Luftschlauch 86 dann aufgeblasen, drückt er mit einer vom Luftdruck abhängigen Kraft gegen die Druckleiste 88, die dadurch radial leicht aus der Nut 84 herausgedrückt wird. Die Druckleiste 88 klemmt dadurch die positionierten Messsegmente 32 gegen einen definierten Anschlag auf der Achse 70 und arretiert so gleichzeitig alle Messsegmente 32 in ihrer korrekten Position. Durch eine Entspannung des Luftschlauchs 86 wird die Arretierung wieder gelöst und die Messsegmente können verschoben und/oder ausgetauscht werden.

In einer andern Erfindungsvariante ist anstelle des Luftschlauchs und der Druckleiste vorgesehen, dass die Messsegmente 32 jeweils mit einer mechanischen Arretierungsvorrichtung versehen sind, durch die sie einzeln auf der Achse fixiert werden können.

Bei dem beschriebenen Ausführungsbeispiel der Figuren 3 bis 8 verläuft der Messabschnitt 54 zwischen dem inneren und äußeren Ringe radialer Richtung, was aufgrund der einfacheren Konstruktion und hohen kraftschlüssigen Spannung gegenwärtig bevorzugt ist. Es ist allerdings ebenfalls möglich, den Messabschnitt eines Messsegments in axialer Richtung verlaufen zu lassen, wie nachfolgend anhand des Ausführungsbeispiels der Fig. 9 erläutert, in der ein erfindungsgemäßes Messsegment 100 schematisch in Seitenansicht gezeigt ist.

Das Messsegment 100 enthält einen Kraftaufnehmer 102, der einen äußeren Ring 110, einen axial beabstandet angeordneten, konzentrischen inneren Ring 112 und einen axialen Messabschnitt 114 umfasst. Der innere Ring 112 sitzt mit wenig Toleranz auf der in der Figur mit gestrichelten Linien angedeuteten Achse 22 auf, so dass er im ungespannten Zustand entlang der Achse verschoben werden kann. Der äußere Ring 110 trägt außen die Lageraufnahme für die Wälzlager 38, auf deren äußerem Umfang der Walzenmantel 34 aufgebracht ist.

Der äußere Ring 110 und der innere Ring 112 sind durch einen axialen Messabschnitt 114 verbunden, der im Ausführungsbeispiel eine im Wesentlichen H-förmige Ausnehmung 116 aufweist und einen Doppelbiegebalken bildet, der mit Dehnmessstreifen 62 zur Erfassung der Spannungen des Messabschnitts 114 versehen ist. Die Toleranz des äußeren Rings 110 gegenüber der Achse 22 ist so bemessen, dass der äußere Ring bei Überlast auf der Achse 22 aufsteht und so eine Zerstörung des Kraftaufnehmers 102 verhindert.

Drückt aufgrund des Bahnzugs eine Kraft 64 auf den Walzenmantel 34 des Messsegments 100, so überträgt sich die Kraft über die Wälzlager auf den äußeren Ring 110, welcher sich über den Messabschnitt 114 am inneren Ring 112 abstützt. Die dadurch im Messabschnitt 114 erzeugten Spannungen werden durch die Dehnmessstreifen 62 erfasst und die erzeugten elektrischen Signale wie oben grundsätzlich bereits beschrieben vorverstärkt, gegebenenfalls digitalisiert, und in die Stromleitungen der Achse 22 eingeleitet. Die Fixierung der Messsegmente 100 auf der Achse kann beispielsweise mechanisch oder pneumatisch erfolgen, wie oben ebenfalls bereits beschrieben.

Neben der Messung der Bahnzüge geschnittener Längsstreifen einer Materialbahn erlaubt die erfindungsgemäße Kraftmesseinrichtung durch die unabhängige Bahnzugmessung der Messsegmente auch die Aufnahme eines Zugprofils einer ungeschnittenen Materialbahn.

Mit Bezug auf Fig. 10 sind die Messsegmente 32 der Kraftmesseinrichtung 20 hierzu so auf der Achse 22 positioniert und arretiert, dass ihre Walzenmäntel 34 ohne sich zu berühren praktisch spaltfrei benachbart sind (Bezugszeichen 120). Um dies sicherzustellen, sind die Messsegmente 32 mit seitlichen Abstandhaltern 40 (Fig. 5) versehen, deren Abmessung so auf die Abmessung des jeweiligen Walzenmantels 34 abgestimmt ist, dass bei einem Zusammenschieben der Messsegmente 32 die gewünschte, praktisch spaltfreie Nebeneinanderanordnung 120 mit gegenseitigen Abständen der Walzenmäntel von wenigen zehntel Millimetern erreicht wird.

Da jedes Messsegment 32 den lokale Bahnzug BZ(x) am Ort x des jeweiligen Messsegments entlang der Querrichtung Q der Materialbahn misst, kann mit der Mehrzahl von Messsegmenten 32 ein Zugprofil 122 der Materialbahn gemessen werden, wie in Fig. 11 schematisch dargestellt. In dem dort gezeigten Zugprofil-Diagramm ist der lokale Bahnzug BZ(x) über der Ortskoordinate x in Querrichtung der Materialbahn aufgetragen. Aus der Kenntnis des Zugprofils können dann geeignete Maßnahmen abgeleitet werden, beispielsweise können bei einem ungleichmäßigen Profil Regelungsmaßnahmen ergriffen werden, die zu einem gleichmäßigeren Zugprofil führen.

Die Breite der für die Zugprofilmessung eingesetzten Messsegmente 32 kann gleich sein, wie im Ausführungsbeispiel der Fig. 10, es kann aber auch zweckmäßig sein, unterschiedlich breite Messsegmente 32 einzusetzen. Beispielsweise können in dem mittleren Bereich der Materialbahn Messsegmente mit schmäleren Walzenmänteln als an den Randbereichen der Materialbahn eingesetzt werden.

## Patentansprüche

1. Kraftmesseinrichtung (20) zur Erfassung von Bahnzügen einer laufenden Materialbahn (10), die eine durch die Laufrichtung definierte Längsrichtung und eine Querrichtung aufweist, wobei die Kraftmesseinrichtung eine Achse (22) und auf der Achse abgestützte, von der Materialbahn umschlungene Messwalze (30) aufweist, **dadurch gekennzeichnet, dass**
- die Messwalze (30) als segmentierte Messwalze mit zwei oder mehr Messsegmenten ausgebildet ist, welche separat auf der Achse verschiebbar und in einer Messposition auf der Achse arretierbar sind, um die Messsegmente (32) entsprechend gewünschter Messpositionen in Querrichtung der Materialbahn (10) zu positionieren, so dass Längsabschnitte der Materialbahn jeweils ein Messsegment umschlingen,
- die Messsegmente (32) jeweils einen Kraftaufnehmer (36) umfassen, der der Bestimmung des Bahnzugs des das jeweilige Messsegment umschlingenden Längsabschnitts der Materialbahn (10) dient und der eine Halterung bereitstellt, mit der das Messsegment auf der Achse aufsitzt, und
- die Achse (22) mit sich im Wesentlichen in axialer Richtung über die gesamte Breite erstreckenden elektrischen Leitern (26) versehen ist, die axial an jeder Stelle kontaktierbar sind und mit denen die von den Kraftaufnehmern (36) der Messsegmente gelieferte Messsignale zu einer an einem Achsenende angeordneten Auswerteeinheit (28) leitbar sind.

2. Kraftmesseinrichtung nach Anspruch 1, **dadurch gekennzeichnet, dass** die Messsegmente neben dem Kraftaufnehmer einen Walzenmantel und eine von dem Kraftaufnehmer getragene Lagerung für den Walzenmantel umfassen.

3. Kraftmesseinrichtung nach Anspruch 1 oder 2, **dadurch gekennzeichnet, dass** der Kraftaufnehmer jeweils einen auf der Achse aufliegenden, und die genannte Halterung bereitstellenden Innenring, einen gegenüber dem Innenring verschiebbaren, konzentrischen Außenring und einen den Innenring und Außenring in einem Verbindungsbereich verbindenden Messabschnitt aufweist.

4. Kraftmesseinrichtung nach Anspruch 3, **dadurch gekennzeichnet, dass** der Innenring eine Einbuchtung aufweist, in der der Verbindungsbereich mit dem Außenring aufgenommen ist.

5. Kraftmesseinrichtung nach Anspruch 4, **dadurch gekennzeichnet, dass** der Kraftaufnehmer mit der Einbuchtung des Innenrings in einer axialen Führungskammer der Achse geführt ist.

6. Kraftmesseinrichtung nach wenigstens einem der Ansprüche 3 bis 5, **dadurch gekennzeichnet, dass** der Innenring und der Außenring radial ineinander angeordnet und in einem radialen Verbindungsbereich durch den Messabschnitt verbunden sind.

7. Kraftmesseinrichtung nach wenigstens einem der Ansprüche 3 bis 5, **dadurch gekennzeichnet, dass** der Innenring und der Außenring axial beabstandet angeordnet und in einem axialen Verbindungsbereich durch den Messabschnitt verbunden sind.

8. Kraftmesseinrichtung nach wenigstens einem der Ansprüche 1 bis 7, **dadurch gekennzeichnet, dass** der Kraftaufnehmer mit Dehnmessstreifen zur Erfassung des Bahnzugs versehen ist, wobei vorzugsweise der einen Innenring und einen Außenring verbindende Messabschnitt mit den genannten Dehnmessstreifen zur Erfassung der in dem Messabschnitt erzeugten mechanischen Spannung versehen ist.

9. Kraftmesseinrichtung nach wenigstens einem der Ansprüche 3 bis 8, **dadurch gekennzeichnet, dass** der Messabschnitt in Form eines Doppelbiegebalkens ausgebildet ist.

10. Kraftmesseinrichtung nach wenigstens einem der Ansprüche 3 bis 9, **dadurch gekennzeichnet, dass** der Innenring, der Außenring und der Messabschnitt des Kraftaufnehmers einstückig ausgebildet sind.

11. Kraftmesseinrichtung nach wenigstens einem der Ansprüche 1 bis 10, **dadurch gekennzeichnet, dass** die Achse als Strangprofil ausgebildet ist, welches vorzugsweise einen vertikalen Steg und zwei von dem vertikalen Steg ausgehende horizontale Führungsschienen aufweist, wobei der vertikale Steg und die beiden Führungsschienen eine U-förmige axiale Führungskammer in dem Strangprofil der Achse bilden.

12. Kraftmesseinrichtung nach wenigstens einem der Ansprüche 1 bis 11, **dadurch gekennzeichnet, dass** die Achse in einer axialen Führungskammer mit axial verlaufenden Stromschienen versehen ist, die an einer beliebigen axialen Position von Stromabnehmern der Kraftaufnehmer der Messsegmente kontaktierbar sind und die genannten elektrischen Leiter bilden.

13. Kraftmesseinrichtung nach wenigstens einem der Ansprüche 8 bis 12, **dadurch gekennzeichnet, dass** die Messsegmente jeweils eine Elektronikeinheit zur Speisung der Dehnmessstreifen und zur Aufnahme, zur Vorverstärkung, vorzugsweise zusätzlich zur Digitalisierung, und zur Einleitung der vorverstärkten und gegebenenfalls digitalisierten Messsignale in die elektrischen Leitungen, insbesondere die Stromschienen der Achse enthalten.

14. Kraftmesseinrichtung nach wenigstens einem der Ansprüche 8 bis 12, **dadurch gekennzeichnet, dass** auf der Achse zwei oder mehr, insbesondere drei oder mehr Messsegmente positioniert und arretiert sind.

15. Kraftmesseinrichtung nach Anspruch 14, **dadurch gekennzeichnet, dass** die Messsegmente zur Erfassung der Bahnzüge der Längsstreifen einer geschnittenen laufenden Materialbahn mit beabstandeten Walzenmänteln auf der Achse positioniert und arretiert sind.

16. Kraftmesseinrichtung nach Anspruch 14, **dadurch gekennzeichnet, dass** die Messsegmente zur Erfassung der Bahnzüge der Längsabschnitte einer ungeschnittenen laufenden Materialbahn so auf der Achse positioniert und arretiert sind, dass ihre Walzenmäntel ohne sich zu berühren praktisch spaltfrei benachbart sind.

## Claims

1. A force measuring device (20) for measuring web tensions of a running material web (10) that comprises a longitudinal direction, defined by the running direction, and a transverse direction, the force measuring device comprising an axis (22) and, supported on the axis, a measuring roller (30) wrapped around by the material web,
**characterized in that**
- the measuring roller (30) is formed as a segmented measuring roller having two or more measuring segments that are separately slidable on the axis and lockable in a measuring position on the axis in order to position the measuring segments (32) in the transverse direction of the material web (10) in accordance with desired measuring positions such that longitudinal sections of the material web wrap around one measuring segment each,
- the measuring segments (32) each comprise a load cell (36) that serves to determine the web tension of the longitudinal section of the material web (10) wrapped around the respective measuring segment and that provides a mount with which the measuring segment rests on the axis, and
- the axis (22) is furnished with electrical conductors (26) that extend substantially in the axial direction across the entire width, that are axially contactable at every position and with which the measuring signals provided by the load cells (36) of the measuring segments are conductible to an evaluation unit (28) arranged on an axis end.

2. The force measuring device according to claim 1, **characterized in that** the measuring segments comprise, in addition to the load cell, a roller casing and, supported by the load cell, a bearing for the roller casing.

3. The force measuring device according to claim 1 or 2, **characterized in that** the load cell comprises, in each case, an inner ring lying on the axis and providing the said mount, a concentric outer ring that is slidable with respect to the inner ring, and a measuring section that connects the inner ring and the outer ring in a connecting region.

4. The force measuring device according to claim 3, **characterized in that** the inner ring comprises an indentation in which the connecting region with the outer ring is accommodated.

5. The force measuring device according to claim 4, **characterized in that** the load cell is guided in an axial guide chamber in the axis with the indentation of the inner ring.

6. The force measuring device according to at least one of claims 3 to 5, **characterized in that** the inner ring and the outer ring are arranged radially nested and are connected in a radial connecting region by the measuring section.

7. The force measuring device according to at least one of claims 3 to 5, **characterized in that** the inner ring and the outer ring are arranged axially spaced apart and are connected in an axial connecting region by the measuring section.

8. The force measuring device according to at least one of claims 1 to 7, **characterized in that** the load cell is furnished with strain gauges for measuring the web tension, the measuring section that connects an inner ring and an outer ring preferably being furnished with the said strain gauges for measuring the mechanical tension produced in the measuring section.

9. The force measuring device according to at least one of claims 3 to 8, **characterized in that** the measuring section is formed in the form of a double bending beam.

10. The force measuring device according to at least one of claims 3 to 9, **characterized in that** the inner ring, the outer ring and the measuring section of the load cell are formed to be one piece.

11. The force measuring device according to at least one of claims 1 to 10, **characterized in that** the axis is formed as an extruded profile that preferably comprises a vertical ridge and two horizontal guide rails extending from the vertical ridge, the vertical ridge and the two guide rails forming a U-shaped axial guide chamber in the extruded profile of the axis.

12. The force measuring device according to at least one of claims 1 to 11, **characterized in that** the axis is furnished in an axial guide chamber with axially running current rails that are contactable at any arbitrary axial position by current collectors in the load cells in the measuring segments and form the said electrical conductors.

13. The force measuring device according to at least one of claims 8 to 12, **characterized in that** the measuring segments each include an electronics unit for feeding the strain gauges and for receiving, for preamplifying, preferably additionally, for digitalizing, and for feeding the preamplified and, if applicable, digitalized measuring signals into the electrical conductors, especially the current rails in the axis.

14. The force measuring device according to at least one of claims 8 to 12, **characterized in that** two or more, especially three or more measuring segments are positioned and locked on the axis.

15. The force measuring device according to claim 14, **characterized in that,** to measure the web tensions of the longitudinal strips of a cut running material web, the measuring segments are positioned and locked on the axis with spaced apart roller casings.

16. The force measuring device according to claim 14, **characterized in that,** to measure the web tensions of the longitudinal sections of an uncut running material web, the measuring segments are positioned and locked on the axis in such a way that their roller casings are adjacent practically without gaps without touching each other.

## Revendications

1. Dispositif de mesure de force (20), destiné à détecter des tractions de bande exercées sur une bande de matière (10) circulante, qui comporte une direction longitudinale définie par la direction de circulation et une direction transversale, le dispositif de mesure de force comportant un axe (22) et un cylindre mesureur (30) soutenu sur l'axe, sur lequel est enroulée la bande de matière,
**caractérisé en ce que**
- le cylindre mesureur (30) est conçu sous la forme d'un cylindre mesureur segmenté, pourvu de deux segments de mesure ou plus, lesquels sont déplaçables séparément sur l'axe et susceptibles d'être bloqués dans une position de mesure sur l'axe, pour positionner les segments de mesure (32) en fonction de positions de mesure souhaitées dans la direction transversale de la bande de matière (10), de sorte que des sections longitudinales de la bande de matière soit enroulées chaque fois autour d'un segment de mesure,
- les segments de mesure (32) comprennent chacun un capteur de force (36) servant à déterminer la traction exercée sur la bande sur le segment longitudinal enroulé autour du segment de mesure en question de la bande de matière (10) et mettant à disposition un support, par lequel le segment de mesure repose sur l'axe (22), et
- l'axe (22) est pourvu de conducteurs électriques (26), s'étendant sensiblement dans la direction axiale sur toute la largeur, qui en direction axiale, sont susceptibles d'être mis en contact sur chaque point et à l'aide desquels les signaux de mesure fournis par les capteurs de force (36) des segments de mesure sont susceptibles d'être dirigés vers une unité d'évaluation (28) placée sur une extrémité de l'axe.

2. Dispositif de mesure de force selon la revendication 1, **caractérisé en ce que** les segments de mesure comprennent, hormis le capteur de force, une chemise de cylindre et un logement porté par le capteur de force pour la chemise de cylindre.

3. Dispositif de mesure de force selon la revendication 1 ou 2, **caractérisé en ce que** le capteur de force comporte respectivement une bague intérieure reposant sur l'axe et mettant à disposition le logement cité, une bague extérieure concentrique, déplaçable par rapport à la bague intérieure et un segment de mesure reliant la bague intérieure et la bague extérieure dans une zone de liaison.

4. Dispositif de mesure de force selon la revendication 3, **caractérisé en ce que** la bague intérieure comporte une échancrure, dans laquelle est réceptionnée la zone de liaison avec la bague extérieure.

5. Dispositif de mesure de force selon la revendication 4, **caractérisé en ce que** le capteur de force est guidé par l'échancrure de la bague intérieure dans une chambre de guidage axiale de l'axe.

6. Dispositif de mesure de force selon au moins l'une quelconque des revendications 3 à 5, **caractérisé en ce que** la bague intérieure et la bague extérieure sont placées l'une dans l'autre en direction radiale et sont reliées dans une zone de liaison radiale par le segment de mesure.

7. Dispositif de mesure de force selon au moins l'une quelconque des revendications 3 à 5, **caractérisé en ce que** la bague intérieure et la bague extérieure sont placées avec un écart en direction axiale et sont reliées dans une zone de liaison axiale par le segment de mesure.

8. Dispositif de mesure de force selon au moins l'une quelconque des revendications 1 à 7, **caractérisé en ce que** le capteur de force est muni d'extensomètres, destinés à détecter la traction exercée sur la bande, de préférence le segment de mesure qui relie une bague intérieure et une bague extérieure étant muni des extensomètres cités, pour la détection de la tension mécanique générée dans le segment de mesure.

9. Dispositif de mesure de force selon au moins l'une quelconque des revendications 3 à 8, **caractérisé en ce que** le segment de mesure est conçu sous la forme d'une double barre de flexion.

10. Dispositif de mesure de force selon au moins l'une quelconque des revendications 3 à 9, **caractérisé en ce que** la bague intérieure, la bague extérieure et le segment de mesure du capteur de force sont conçus en monobloc.

11. Dispositif de mesure de force selon au moins l'une quelconque des revendications 1 à 10, **caractérisé en ce que** l'axe est conçu sous la forme d'un profilé extrudé, lequel comporte de préférence une barrette verticale et deux glissières horizontales partant de la barrette verticale, la barrette verticale et les deux glissières formant une chambre de guidage axiale en forme de U dans le profilé extrudé de l'axe.

12. Dispositif de mesure de force selon au moins l'une quelconque des revendications 1 à 11, **caractérisé en ce que** l'axe est muni dans une chambre de guidage axiale de rails conducteurs s'écoulant en direction axiale, qui sont susceptibles d'être mis en contact sur une position axiale quelconque de collecteurs de courant des capteurs de force des segments de mesure et qui forment les conducteurs électriques cités.

13. Dispositif de mesure de force selon au moins l'une quelconque des revendications 8 à 12, **caractérisé en ce que** les segments de mesure comprennent chacun une unité électronique, destinée à alimenter les extensomètres et pour recevoir, pour préamplifier, de préférence en sus de la numérisation et pour introduire les signaux de mesure préamplifiés et le cas échéant numérisés dans les lignes électriques, comprennent notamment les rails conducteurs de l'axe.

14. Dispositif de mesure de force selon au moins l'une quelconque des revendications 8 à 12, **caractérisé en ce que** deux segments de mesure ou plus, notamment trois ou plus sont positionnés et bloqués sur l'axe.

15. Dispositif de mesure de force selon la revendication 14, **caractérisé en ce que** pour détecter les tractions exercées sur la bande des rubans longitudinaux d'une bande de matière coupée circulante, les segments de mesure sont positionnés et bloqués sur l'axe par des chemises de cylindre écartées.

16. Dispositif de mesure de force selon la revendication 14, **caractérisé en ce que** pour détecter les tractions exercées sur la bande des segments longitudinaux d'une bande de matière circulante non coupée, les segments de mesure sont positionnés et bloqués sur l'axe, de telle sorte que leurs chemises de cylindre soient voisines pratiquement sans interstices, sans pourtant se toucher.
